Europäisches Patentamt

European Patent Office

Office européen des brevets

(11) Publication number: 0 351 469
A1

## (12) EUROPEAN PATENT APPLICATION

(21) Application number: 88309161.3

(22) Date of filing: 03.10.88

(51) Int. Cl.4: G01C 17/34

(30) Priority: 06.07.88 IL 86993

(43) Date of publication of application:
24.01.90 Bulletin 90/04

(84) Designated Contracting States:
AT BE CH DE ES FR GB GR IT LI LU NL SE

(71) Applicant: AZIMUTH LTD.,
66 Rothschild Blvd.
Tel-Aviv 65 785(IL)

(72) Inventor: Kutz Giora
66 Rothschild Boulevard
Tel-Aviv 65785(IL)
Inventor: Amir, Ofer
66 Rothschild Boulevard
Tel-Aviv 65785(IL)
Inventor: Reismanm, Shlomo
66 Rotschild Boulevard
Tel-Aviv 65 785(IL)

(74) Representative: Thomson, Paul Anthony et al
Potts, Kerr & Co. 15, Hamilton Square
Birkenhead Merseyside L41 6BR(GB)

(54) An astronomical north finding system.

(57) An astronomical north finding system comprising a hand held computer having a designated software computer program operating in conjunction with an astronomical sighting device attached to an element to be northed; so that when the user feeds the said computer with data of the location and time, the said computer program works out the azimuth with respect to the selected celestial body to be sighted as a reference point; and the said computer displays the azimuth, correcting it continuously with time change; and the said element to be northed is sighted with respect to the said celestial body with the aid of said astronomical sighting device, and the user then reads the respective azimuth from the said computer, having thus northed the said element.

F I G.1

## AN ASTRONOMICAL NORTH FINDING SYSTEM

### Field of the invention

The present invention relates to an astronomical north finding module comprising an angular measuring instrument for determining the true bearing during day time using the sun as a reference; and a hand held computer having a memory with an alpha numeric screen, able to process the input information with the aid of a specific program software; and a computer software designed to work out the exact azimuth with respect to the sun based on the location, time and date introduced.

### Object of the invention

The object of the invention is to provide means for finding fast and simple solutions for accurate true north or bearing utilizing an angular measuring device with sighting device during daytime, using the sun as a reference, thus achieving at relatively low costs, accuracies better than 1 miliradian. So that it can be used with an optical director, or for use in northing directional antenas, or other simmilar uses, requiring fast and accurate azimuth determinations.

Several products are known in the prior art claiming to do the same job; such as the astronomical compass, which works with the aide of celestial bodies, and is mostly used in the north and south poles, where regular gyro and magnetic compasses are inaccurate, due to the proximity of the earth's axis and the magnetic pole. The astronomical compass enables to detect the azimuth with respect to the celestial bodies when it is fed with the actual equitorial lines where the person measuring is located. The major draw back of this compass is that due to the structure of its sighting device, and its mechanical structure, the accuracy of the measured azimuth is far lower than 1 miliradian, and thus can not be used satisfactorily for accurate directional purposes.

Gyro compasses are expensive and as well as magnetic compasses have the draw back explained above in the north and south pole vicinities.

Angular measuring instruments for determining true bearing during the daytime commonly use the sun as a reference. One technique now widely used is to sight, via a smoked filter, one edge of the sun and then the opposite edge of the sun. Since this technique requires making two distinct sightings, the time interval between them, no matter how small, introduces an error in the bearing calculation.

Computers and software for navigation with the aide of astronomy are available in several forms, mostly for naval users, or surveyance. Their major use is to assist the user to determine his position by measuring the elevation angles with respect to two or more celestical bodies. Then after introducing the estimated position, the date and time one receives from the computer information which enables the user to draw the lines of position thus establishing the exact position. The system is not satisfactorily used for accurate directional immediate needs due to the length of time taken to establish the exact azimuth. Also the presently known devices do not have an off-set deviation factor enabling sighting the element to an off-set angle to the azimuth.

In the invention described below the system comprises of three elements; namely the hand held computer, having a designed software program which is operating in conjunction with the astronomical sighting device which is attached to the element to be northed such as an antenna or mortar etc.

There is provided an angular measuring instrument particularly useful for determining true bearing during the daytime using the sun as a reference, characterized in that said instrument includes: an angularly-movable sighting device for sighting the sun; a shadow-producing-member fixed to said sighting device so as to produce a shadow by the sun at a location corresponding to the angular position of the sighting device with respect to the sun; and a reference number also fixed to said sighting device such as to have said shadow cast at a predetermined location thereon when said shadow-producing-member is exactly alligned with the sun.

The user feeds the said computer with data of the location, and time so that the said computer program can work out the azimuth with respect to the selected celestial body to be sighted as a reference point. The said computer displays the said azimuth correcting it continuously with the time change. The said element to be northed is sighted with respect to the celestial body with the aide of the said astronomical sighting device or at night by alternative available known sighting devices and the user then reads the respective azimuth from the said computer display having thus northed the said element.

Once the date and time is introduced. The software enables the user to operate in one of two ways; either by establishing the azimuth with respect to a celestial body at any set future or past time. The draw back in this method is that the user has to leave a sufficient time gap between the measurement time and the required time for the directional use. A mistake in the time gap regarding future time setting may require repeated action.

Or, as specifically designed by the proposed invention the azimuth is continuously displayed on the computer screen and is readjusted every preset time increment. So that once the computer was operated at a given time the azimuth is readjusted automatically every fraction of a second by continuously calculating the azimuth with respect to the sun, or other celestial body, bearing measurement. The program also takes into account the deviation angle between the astronomical sighting device and the northed element axis (such as the antenna). The resulting azimuth received by the specific computer program gives the deviated sighting of the element.

In a preferred embodiment of the invention described below, the shadow-producing-member is a vertically extended post, and the reference number includes a horizontally-extending surface on which the shadow is cast. More particularly, the vertically-extending post is fixed to the reference member to protect vertically therefrom and has a width slightly less than that of the horizontally-extending white painted surface so as to cast thereon a shadow centrally thereof and straddled by equally-dimentioned unshadowed side margins when the sight is exactly alligned with the sun.

It has been found that the human eye and mind can make a very quick and accurate comparison between two such margins, particularly when they are relatively close to each other and of very small thickness, to determine whether the two margins are exactly equal. When this determination is made optically, the user known that at this instant the sighting device is exactly alligned with the sun in azimuth i.e. in the horizontal angular direction.

The invention also provides an indicator attachable to any instrument for determining when the instrument is exactly aligned with the sun.

The invention is herein described, by way of example only, with reference to the accompanying drawings, wherein:

Fig 1 schematically illustrates one form of angular measuring instrument equipped with a sighting device constructed in accordance with the present invention;

Fig 2 is a three-dimentional view of the sighting device to the angular measuring instrument of Fig. 1, which provides an accurate indication when the said instrument is exactly aligned with the sun;

Fig 3 schematically illustrates an angular measuring instrument equipped with another form of indicator constructed in accordance with the present invention;

Figs 4a and 4b illustrate the construction of the two main components of the indicator attachment included in the instrument of Fig 3; and

Figs 5 and 6 illustrate two other forms of indicators with the present invention;

Fig 7 computer sequence flow chart.

Detailed description of the invention

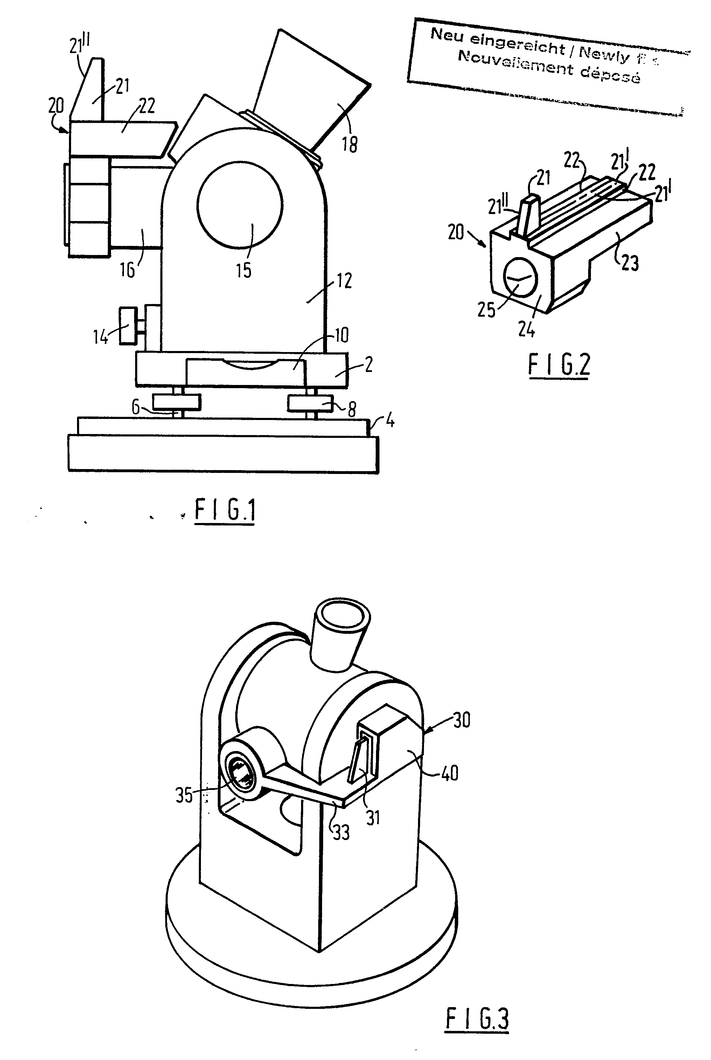

The angular measuring instrument illustrated in Fig 1 may be of any of the conventional constructions such as are used in marking position surveys, navigation and the like for determining the bearing of a specific object with respect to a reference direction. During the daytime, the sun may be used as the reference, and during the nightime, any star, known to the said software.

Angular measuring instruments of the foregoing type, also commonly called goniometers, generally include a table 2 mounted to a horizontal base 4 by a plurality of legs 6 which are adjustable by knobs 8 to bring table 2 in precise horizontal position as indicated by a spirit level indicator 10. Such instruments also generally include a head 12 mounted for rotation about a vertical axis under the control knob 14. The rotation angle is displayed to the operator (not seen). Head 12 includes a sighting device, generally in the form of a telescope 16 for sighting the reference, and an eye piece 18 viewable by the user during the sighting operations. The telescope 16 may be elevated about a horizontal axis.

Such angular measuring instruments commonly include many other elements for providing various types of information during the use of the instrument. However, since the instruments are of well-known construction, and particularly since the actual construction of the instrument does not form a part of the present invention, further details of the construction and operation of the instrument are not set forth herein.

In accordance with the present invention, the sighting telescope 16 is provided with a sighting device, generally designated 20, for indicating when the sighting telescope is exaclty aligned with the sun or any set deviation. Briefly, device 20 includes a shadow-producing-member 21 fixed to the sighting telescope so as to produce a shadow by the sun at a location corresponding to the angular position of the sighting telescope with respect to the sun, and a reference member 22 also fixed to the sighting telescope such as to have the shadow cast at a predetermined location thereon when the sighting device 20 is exactly aligned with the sun.

Device 20 is more particularly illustrated in Fig 2, wherein it will be seen that the shadow-producing-member 21 is in the form of a vertically-extending post, and the reference member 22 includes a horizontally-extending white painted surface on which the shadow from post 21 is cast; the latter shadow is indicated at 21' in fig 2. Both the shadow-producing post 21 and the reference member 22 are integrally formed on a common base 23 having a central bore 24,defining a sleeve for mounting to the sighting telescope 16 of the instrument illustrated in fig 1.

Post 21 is of rectangular configuration in vertical cross-section and is located at the front end of the reference member 22; the latter is defined by a horizontally-extending rib formed in the upper face of base 23. The shadow producing post 21 is of a width slightly less than that of a rib 22 so as to cast a shadow 21' of the same rectangular configuration as the vertical cross-section of post 21 on the upper surface of rib 22. Since the width of post 21 is slightly less than that of the upper horizontal surface of rib 22, it will be seen that when the post 21 is exactly aligned with the sun, shadow 21' will be located exactly in the center of the upper horizontal surface of rib 22, and will be straddled by equally-dimensioned unshaded side margins, as shown at 22'.

Post 21 and rib 22 may be precisely machined so as to be integral with the same 23 of the indicator 20, with the front end of base 23 extended downwardly to define a front wall 24. The latter wall is machined with a central bore 25 to define a sleeve for mounting it to sighting telescope 16. The opposite side faces of post 21 are precisely machined so as to be perfectly flat and precisely parallel to each other and thereby to cast a well defined rectangular shadow 21' on the upper face of rib 22. The front face 21'' of post 21 is preferably tapered inwardly from bottom to top so that the bottom of the post is of larger dimension than the top in the direction parallel to the longitudinal axis of rib 22, as shown particularly in Fig 1, for strengthening purposes.

It will be thus seen that the sighting telescope 16 of the instrument may be moved to bring it into alignment with the sun. As soon as it is in exact alignment with the sun, post 21 produces a shadow 21' (Fig 2) which is exactly centered on the upper face of rib 22, this being readily discernable when the two margins 22' an the opposite sides of the case shadow 21' are equal dimensions. As mentioned earlier, it has been found that the human eye and the human mind can make this comparison very quickly and very accurately, and therefore instruments equipped with the device as illustrated in Figs 1 and 2 permit much higher accuracy in determining true bearing as compared, for example, to the previous known optical directors, as well as the commonly used magnetic and gyro compasses.

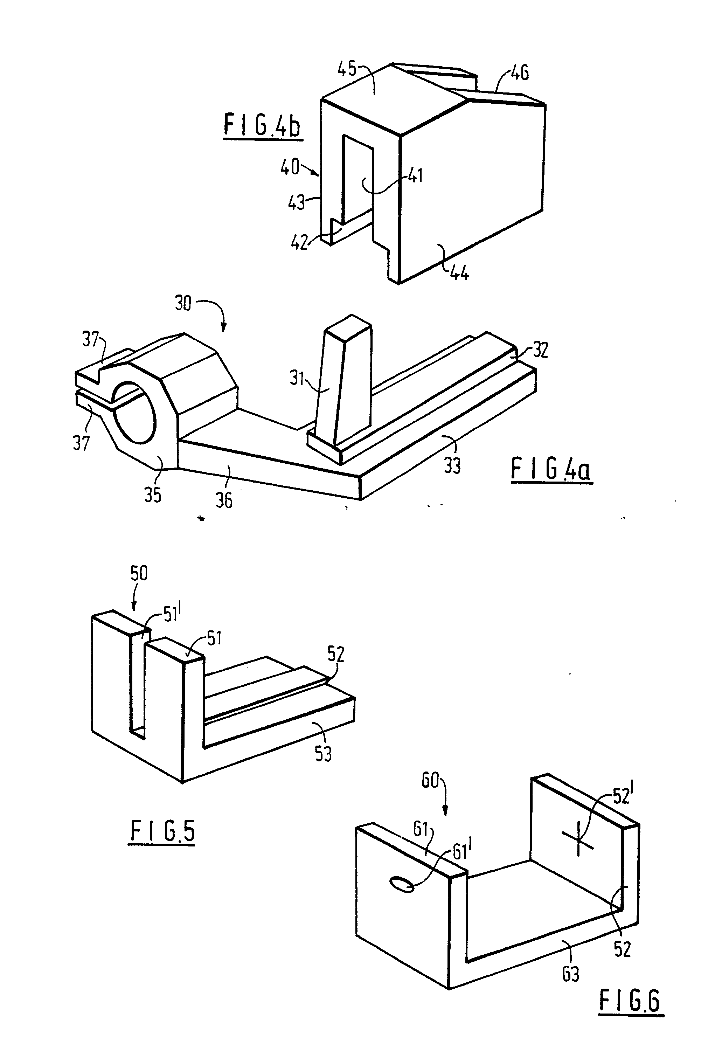

Fig 3 illustrates another type of a sighting device, therein generally designated 30, which may be used in this type of instrument; and Figs 4a and 4b illustrate the construction of such a device. Briefly, the device in Figs 3, 4a and 4b is of very similar construction and operates on exactly the same principal as that described above in respect to Figs 1 and 2, except that the sighting device member, generally designated as 30, Fig 4a, is mounted laterally of the sighting telescope 16, rather than overlying it as in Figs 1 and 2; also, the device includes a hood, generally designated as 40 in Fig 4b, is optionally provided for shielding the shadow producing member and the reference member from extraneous light.

More particularly, the shadow-producing - member 31 in the arrangement illustrated in Figs 3, 4a and 4b, is also in the form of a vertically-extending post secured to the front end of the reference member 32. the latter member is also in the form of a rib 32 integrally formed on a common base 33. Also as in figs 1 and 2, base 33 includes a sleeve 35 for mounting same to the sighting telescope (16 in Fig 1). In the arrangement of Figs 3, 4a and 4b, however, mounting sleeve 35 is carried at one end of an arm 36 extending laterally from base 33, and also includes a pair of clamping jaws 37 to enable the indicator to be mounted directly to, and laterally of, the instrument sighting telescope.

Hood 40 protects post 31 and reference member 32 from extraneous light, thus intensifying the shadow and the contrast. Hood 40 is formed from a solid block machined with a centre slot 41 slightly wider than the shadow-producing post 31, which slot 41 is further widened at the bottom as shown at 42 to accomodate the reference rib 32. Thus, the block so machined defines two side walls 43, 44, joined by a top wall, 45; all these walls shield post 31 and rib 32 from extraneous light. In addition, the rear upper side of the block is machined along a tapered line to define a tapered surface 46 facilitating the viewing of the shadow cast by post 31 on the upper surface of rib 32.

It will of course be appreciated that hood 44 may be omitted if this shielding is not necessary, and that such a hood could also be provided with respect to the sighting device 20 illustrated in Figs 1 and 2.

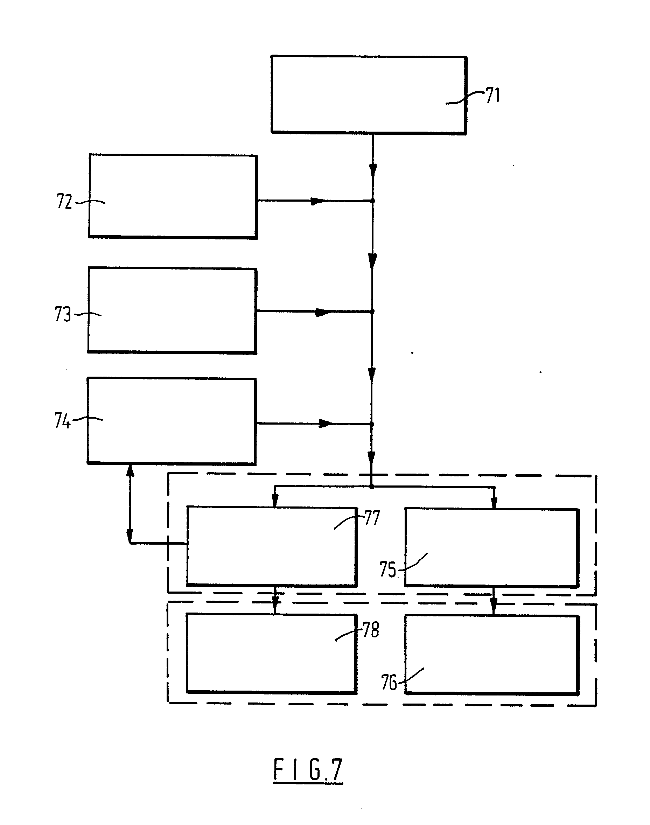

Fig 5 illustrates a further form of sighting device that may be used. In the arrangement of Fig 5, the shadow-producing-member is constituted of a vertically-extending fron wall 51 formed with a vertically-extending slit 51'; and the reference member is constituted of a rib formed on the upper face of the common base 53. Thus, when indicator 50 of Fig 5 is exactly aligned with the sun, slot 51' forms a shadow centrally of the upper face of rib 52; however, in this case the shadow appears on the outer margins of the upper face of rib 52, whereas the central area of this surface is lit by the strip of light passing through slit 51' in wall 51.

Fig 6 illustrates a different sighting device, generally designated 60, which may be used. In the device of Fig 6, the shadow-producing-member is also defined by a vertically-extending plate 61, as in Fig 5, except that this plate is formed with an aperture 61', rather with the slit 51'. The reference member in the arrangement illustrated in Fig 6 is in the form of another vertically-extending plate 52 which has a marking 52' on it to be lit by the light passing through opening 61' when device 60 is exactly aligned with the sun. Thus, when this occurs, wall 61 of the device would cast a shadow blocking the light from the complete face of wall 52 at the rear end of the indicator, except for the point indicated by marking 52', which point would be lit by the light passing through opening 61'.

Both the front shadow-producing wall 61, and the rear reference wall 62, are preferably integrally formed with the base 63 of the sighting device. The instrument illustrated in Fig 6, as well as that illustrated in Fig 5, could include either of the attaching arrangements illustrated in Figs 1, 2 and 3, 4a, 4b respectively, and could also include the hood of the latter arrangement, if desired.

Fig 7 illustrates the schematic drawing of the computer program sequence. The constant data including interalia such information as the astronomical sight deviation, etc is fed into the constant data storage 71.

The location on earth for which the reading is to be taken is entered into 72 either manually, or by an electric pulse from an external navigation system.

The definition of the specific celestial body relative to which the azimuth is taken is entered at 73.

The time and data is entered manually or through a computer clock storing continuous time and date. The information is entered at 74.

The classical azimuth calculation for a given past or future time is worked out by the classical algorithm as illustrated in 75, and gives a display of the azimuth on 76, for the given specific time.

By the aide of a specific program the subject of this invention further azimuth calculations are worked out, according to a synchronised timing schedule. This is displayed in 77, which then gives a synchronized new corrected azimuth on the screen, every so often, as illustrated in 78.

The invention was illustrated and described according to the accompanying drawings, however it should be appreciated that many other variations, modifications and applications can be made.

## Claims

1. An atronomical north finding system comprising a hand held computer having a designated software computer program operating in conjunction with an astronomical sighting device attached to an element to be northed; so that when the user feeds the said computer with data of the location and time, the said computer program works out the azimuth with respected to the selected celestial body to be sighted as a reference point; and the said computer displays the azimuth; correcting it continuously with time change; and the said element to be northed is sighted with respect to the said celestial body with the aide of the said astronomical sighting device, and the user then reads the respective azimuth from the said computer, having thus northed the said element.

2. A system as in claim 1 particularly useful for determining true bearing to be used during the daytime using the sun as a reference, and at night using the conventional telescope sighting devices, wherein the said astronomical sighting device is mounted on an angular measuring instrument characterized in that said instrument includes:
an angularly-moveable sighting device for sighting the sun;
a shadow-producing-member fixed as part of the said sighting device so as to produce a shadow by the sun at a location corresponding to the angular position of the sighting device with respect to the sun;
and a reference number also fixed to said sighting device such as to have said shadow cast at a predetermined location thereon when said sighting device is exactly aligned with the sun.

3. The instrument according to claim 2 wherein said sighting device includes a vertically-extending post, and said reference member includes a horizontally-extending white painted surface on which said shadow is cast.

4. The instrument according to claim 3, wherein said vertically-extending post is fixed to said reference member to protect vertically therefrom and has a width slightly less than that of said horizontally-extending surface so as to cast thereon a shadow centrally thereof and straddled by equally-dimensioned unshadowed side margins when the sighting device is exactly aligned with the sun.

5. The instrument according to claim 4 wherein said vertically-extending post is of rectangular configuration in vertical cross-section, the upper face of said horizontally-extending surface of the reference member on which the shadow is cast being also of rectangular configuration and having a width slightly larger than the width of said vertically-extending post.

6. The instrument according to either of claims 4 or 5, further including a hood overlying said vertically-extending post and said reference member, said hood including side and top walls for shielding said members from extraneous light, thus amplifying the shadow contrasts.

7. The instrument according to claim 2, wherein said shadow-producing-member comprises a vertically-extending member formed with a vertically-extending slit for casting a shadow defining a said slit on a predetermined location of said reference member.

8. The instrument according to claim 2, wherein said shadow-producing-member comprises a vertically-extending member formed with an aperture therethrogh for casting a shadow defining said aperture on a predetermined location of said reference member.

9. A system as in claims 1-8 wherein the said computer software program enables the user to establish the azimuth with respect to any set future or past time.

10. An astronomical sighting device attachable to any instrument for indicating when the instrument is exactly aligned with the sun, said device comprising all such features as claimed in claim 3-9.

11. A system as in claim 1-10 wherein the said astronomical sighting device has an accuracy better than one miliradian.

12. A system as in claims 1-11 wherein the element to be northed is a mortar or optical director.

13. A system as in claims 1-11 wherein the element to be northed is an antenna.

14. A system as in claims 1-11 wherein the said computer software program enables to display a continuously time adjusted azimuth, adjusted every required time increment, with respect to the desired celestial body; and the said program also takes into account a possible requested deviation angle measured between the said element to be northed and the astronomical sighting device.

FIG.1

FIG.2

FIG.3

filed

FIG.4b

FIG.4a

FIG.5

FIG.6

FIG.7

European Patent Office

**EUROPEAN SEARCH REPORT**

Application Number

EP 88 30 9161

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-3 509 449 (KUAU) * Figures 1,3; page 12, line 10 - page 14, line 4 * | 1 | G 01 C 17/34 |
| A | US-A-3 968 570 (LEUCHTER) * Figures 1,2; abstract * | 1 | |
| A | GB-A- 619 836 (EVERITT) * Whole document * | 2 | |
| A | PATENT ABSTRACTS OF JAPAN, vol. 8, no. 213 (E-269)[1650], 28th September 1984; JP-A-59 097 206 (YASUO NAGAZUMI) 05-06-1984 * Whole document * | 13 | |

| | | | TECHNICAL FIELDS SEARCHED (Int. Cl.4) |
|---|---|---|---|
| | | | G 01 C<br>H 01 Q |

The present search report has been drawn up for all claims

| Place of search | Date of completion of the search | Examiner |
|---|---|---|
| THE HAGUE | 17-10-1989 | KOLBE W.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

\& : member of the same patent family, corresponding document

EPO FORM 1503 03.82 (P0401)